# EUROPEAN PATENT SPECIFICATION

(11) **EP 3 767 499 B1**
(45) Date of publication and mention of the grant of the patent: **14.05.2025**
(21) Application number: 19767145.6
(22) Date of filing: 17.01.2019
(51) Int. Cl.: G06F 21/57, G06F 21/12, G06F 8/61

(54) **CONTROLLER, LICENSE MANAGEMENT METHOD, AND LICENSE MANAGEMENT PROGRAM**
STEUERGERÄT, LIZENZVERWALTUNGSVERFAHREN UND LIZENZVERWALTUNGSPROGRAMM
CONTRÔLEUR, PROCÉDÉ DE GESTION DE LICENCE, ET PROGRAMME DE GESTION DE LICENCE

(30) Priority: 13.03.2018 JP 2018045097
(43) Date of publication of application: 20.01.2021
(73) Proprietor: Omron Corporation, Kyoto-shi, Kyoto 600-8530 (JP)
(72) Inventor: NISHIYAMA, Yoshihide, Kizugawa-shi, Kyoto 619-0283 (JP); KOJIMA, Tatsuya, Kizugawa-shi, Kyoto 619-0283 (JP); KAWANOUE, Shinsuke, Kizugawa-shi, Kyoto 619-0283 (JP)
(74) Representative: Kilian Kilian & Partner mbB
(86) International application number: PCT/JP2019/001250
(87) International publication number: WO 2019/176274

(56) References cited:
- EP-A1- 3 062 276
- WO-A1-2015/136972
- JP-A- 2007 148 806
- JP-A- 2011 165 041
- JP-A- 2013 171 346
- JP-A- 2013 239 036
- JP-A- H07 262 001
- US-A- 4 688 169
- US-A1- 2015 278 489

## Description

### TECHNICAL FIELD

The present disclosure relates to a technique for managing use of software downloaded to a controller.

### BACKGROUND ART

In various production sites, FA (Factory Automation) systems for automating production processes have been pervasive. Each of such FA systems includes various industrial drive devices. Examples of the industrial drive devices include: a movable table for moving a workpiece; a conveyor for conveying a workpiece; an arm robot for moving a workpiece to a predetermined target location; and the like. These drive devices are controlled by industrial controllers such as PLCs (Programmable Logic Controllers) and robot controllers.

In recent years, controllers to which software can be installed from external devices have been pervasive. Such controllers are disclosed in WO 2015/136965 (Patent Literature 1), WO 2015/136972 (Patent Literature 2), WO 2015/136966 (Patent Literature 3), and WO 2015/136964 (Patent Literature 4).

Further prior art documents are US 2015/278489 A1 and EP 3 062 276 A1.

US 2015/278489 A1 discloses a method of binding a software to a device. Accordingly, during a setup of the software in the device, a unique identifier is derived from contents stored in the device and the derived unique identifier is encrypted. The derived unique identifier is then stored in a configuration of the software. During a next invocation of the software in the device, a new unique identifier is derived from the contents stored in the device. The newly derived unique identifier is then matched with the stored unique identifier. The execution of the software is terminated if the matching fails.

Moreover, EP 3 062 276 A1 discloses techniques to facilitate protection of control system content used in an industrial automation environment. In at least one implementation, the control system content for use in the industrial automation environment is received, wherein the control system content comprises controller program code that directs an industrial controller to drive a machine system. Content protection instructions for the control system content are also received, wherein the content protection instructions comprise restrictions on execution of the control system content. An execution license that includes process-related constraints for the control system content is generated based on the content protection instructions. The execution license is applied to the control system content to generate protected content, wherein use of the control system content is granted subject to the process-related constraints of the execution license.

### CITATION LIST

### PATENT LITERATURE

PTL 1: WO 2015/136965
PTL 2: WO 2015/136972
PTL 3: WO 2015/136966
PTL 4: WO 2015/136964

### SUMMARY OF INVENTION

### TECHNICAL PROBLEM

In recent years, since various types of software have been developed, management of software licenses has become complicated. If a license is not managed appropriately, purchased software may be copied in an unauthorized manner, which may lead to unauthorized use of the software in a different controller not having the license. Therefore, a mechanism for preventing such unauthorized use is desired.

The present disclosure has been made to solve the above-described problem, and an object thereof in a certain aspect is to provide a mechanism by which unauthorized use of software downloaded to a controller can be prevented. This object is achieved by the subject-matter of the independent claims. Further modifications and embodiments of the invention are the subject-matter of the dependent claims. The invention is defined by the independent claims.

A controller as defined by claim 1 is for controlling a control target and includes: an obtaining unit that obtains, from an external device, software to be used by the controller; and a processor that executes the software. The software includes: a generation module that generates an execution right for the software from first unique information for uniquely identifying the controller or the external device; and a check module that generates second unique information from the execution right at a predetermined timing after the generation of the execution right, and that prohibits use of the software when the second unique information does not coincide with the first unique information.

Accordingly, use of the obtained software is prohibited based on the license information, whereby unauthorized use of the software is prevented.

In one example, the external device includes a communication device that communicates with the controller. The obtaining unit downloads the software from the communication device communicatively connected to the controller.

Accordingly, unauthorized use of the software downloaded from the communication device is prevented.

In one example, the external device includes a memory card that is electrically connectable to the controller. The obtaining unit obtains the software from the memory card electrically connected to the controller.

Accordingly, unauthorized use of the software obtained from the memory card is prevented.

In one example, the processor deletes the execution right when transferring the obtained software from the controller to the external device.

Accordingly, a plurality of pieces of the license information of the software do not exist, whereby unauthorized use of the software is prevented more securely.

In one example, the processor deletes the generation module and the check module when transferring the obtained software from the controller to the external device.

Accordingly, since the generation module and the check module are deleted, a resource of the controller can be effectively used.

In one example, the software obtainable from the external device includes at least one of a program to be operated on firmware of the controller, a program to be added to the firmware, and data usable by the controller.

Accordingly, unauthorized use of the program to be operated on the firmware and the program to be added to the firmware is prevented.

A method as defined in claim 4 is for managing a license of software used by a controller for controlling a control target and includes: obtaining, from an external device, software to be used by the controller, and first license information for the software; and executing the software. The executing includes: generating an execution right for the software from first unique information for uniquely identifying the controller or the external device; and generating second unique information from the execution right at a predetermined timing after the generation of the execution right, and prohibiting use of the software when the second unique information does not coincide with the first unique information.

Accordingly, use of the obtained software is prohibited based on the license information, whereby unauthorized use of the software is prevented.

A program as defined in claim 5 is for managing a license of software used by a controller for controlling a control target and causes the controller to perform: obtaining, from an external device, software to be used by the controller for controlling the control target; and executing the software. The executing includes: generating an execution right for the software from first unique information for uniquely identifying the controller or the external device; and generating second unique information from the execution right at a predetermined timing after the generation of the execution right, and prohibiting use of the software when the second unique information does not coincide with the first unique information.

Accordingly, use of the obtained software is prohibited based on the license information, whereby unauthorized use of the software is prevented.

### ADVANTAGEOUS EFFECTS OF INVENTION

In a certain aspect, unauthorized use of software downloaded to a controller can be prevented.

### BRIEF DESCRIPTION OF DRAWINGS

Fig. 1 shows an overview of a FA system according to an embodiment.
Fig. 2 is a schematic view schematically showing a device configuration of the FA system according to the embodiment.
Fig. 3 shows a mechanism for selling package software by way of downloading.
Fig. 4 is a sequence diagram showing a data flow among a controller, a development assistance device, and a server.
Fig. 5 shows a data structure of a software management table.
Fig. 6 is a schematic view showing an exemplary hardware configuration of the controller according to the embodiment.
Fig. 7 is a schematic view showing a hardware configuration of an external device according to the embodiment.
Fig. 8 is a flowchart showing a process for downloading the package software from the development assistance device.
Fig. 9 is a flowchart showing a process for validating use of the package software.
Fig. 10 is a flowchart showing a check process for an execution right.
Fig. 11 is a flowchart showing an execution process for the downloaded package software.
Fig. 12 shows a mechanism for selling the package software by way of a memory card.
Fig. 13 is a flowchart showing a process for downloading the package software from the memory card.
Fig. 14 schematically shows a flow of a deploy process for the package software.
Fig. 15 shows continuation of the deploy process shown in Fig. 14.
Fig. 16 shows a state in which the package software is transferred between the controller and the memory card.
Fig. 17 shows a mechanism for selling the package software by way of BTO (Build To Order).

### DESCRIPTION OF EMBODIMENTS

The following describes embodiments according to the present invention with reference to figures. In the description below, the same reference characters are given to the same parts and components. Their names and functions are also the same. Hence, they are not described in detail repeatedly.

### <A. Implementation>

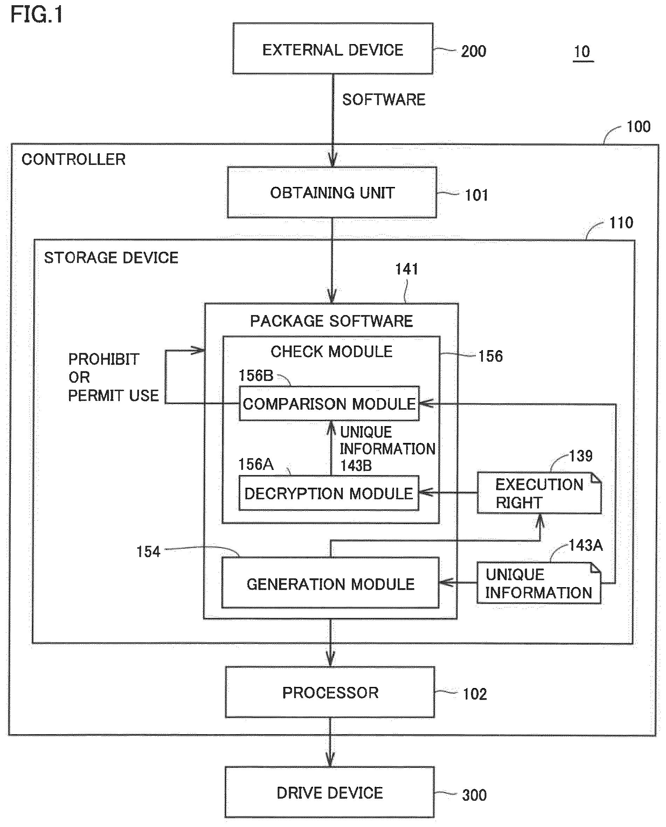

An implementation of the present invention will be described with reference to Fig. 1. Fig. 1 shows an overview of an FA system 10.

FA system 10 is a system for controlling a control target such as a facility or a device to automate a production process. FA system 10 includes one or more controllers 100, one or more external devices 200, and one or more drive devices 300.

Controller 100 includes an obtaining unit 101, a processor 102, and a storage device 110 as hardware configurations. Storage device 110 stores package software 141 downloaded from external device 200, and unique information 143A of controller 100.

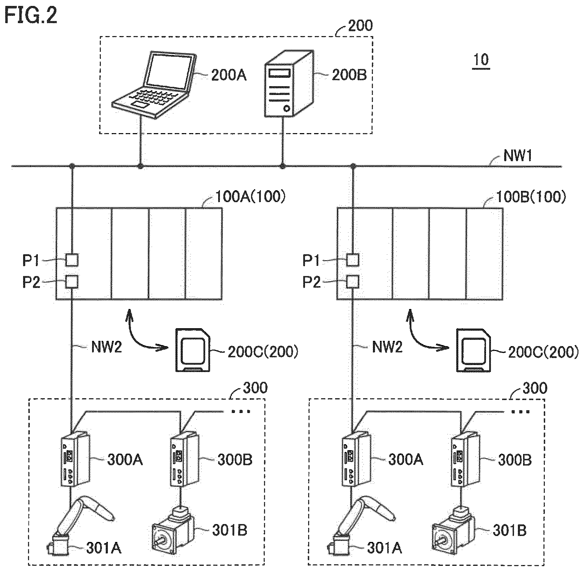

External device 200 provides various types of software executable by controller 100. Examples of such an external device 200 include a below-described development assistance device 200A (see Fig. 2), a below-described server 200B (see Fig. 2), a below-described memory card 200C (see Fig. 2), and the like.

Obtaining unit 101 is appropriate hardware having a function of obtaining software from external device 200. As an example, obtaining unit 101 includes: a communication interface for communicating with external device 200; a memory card interface to which a memory card such as an SD card is connectable; or the like.

In the example of Fig. 1, the software downloaded from external device 200 is shown as package software 141. Package software 141 represents a unit of a program for sale with a package of various functions. Examples of package software 141 include: a function to be added to controller 100; data; and the like.

Processor 102 executes various types of programs of controller 100 to control a drive device 300 serving as a control target. As an example, the programs executed by processor 102 include various types of programs, such as downloaded package software 141.

Downloaded package software 141 includes a generation module 154, a check module 156, and other function modules. Each of the other function modules is a function module usable by the user. Generation module 154 and check module 156 are accompanied with the function module.

Generation module 154 generates execution right 139 for package software 141 from unique information 143A (first unique information) for uniquely identifying controller 100. Execution right 139 corresponds to an authority to execute package software 141. That is, controller 100 holding execution right 139 can execute package software 141. Unique information 143A includes: format, production information (such as manufacturing number), and name of controller 100 or processor 102; and other information for uniquely identifying controller 100, for example.

Any method is employed to generate execution right 139. As an example, generation module 154 generates execution right 139 by encrypting unique information 143A in accordance with a predetermined encryption method. In this case, generation module 154 generates execution right 139 using a predetermined encryption key. Alternatively, generation module 154 may generate, as execution right 139, a result obtained by substituting unique information 143A for a predetermined, reversibly computable formula. Generated execution right 139 is stored into storage device 110.

Check module 156 generates unique information (second unique information) from execution right 139 at a predetermined timing after the generation of execution right 139, such as a time at which controller 100 is activated or a time at which package software 141 is executed. In the description below, for the ease of description, the unique information held in advance in controller 100 will be referred to as "unique information 143A", and the unique information generated from execution right 139 after the generation of execution right 139 will be referred to as "unique information 143B". Check module 156 prohibits use of package software 141 when unique information 143B does not coincide with original unique information 143A.

More specifically, check module 156 includes a decryption module 156A and a comparison module 156B. Decryption module 156A decrypts execution right 139 in accordance with a predetermined decryption method using a predetermined decryption key, thereby generating unique information 143B.

Comparison module 156B compares unique information 143B generated at the time at which controller 100 is activated or the time at which package software 141 is used, with original unique information 143A. When unique information 143B coincides with unique information 143A, comparison module 156B permits use of downloaded package software 141. On the other hand, when unique information 143B does not coincide with unique information 143A, comparison module 156B prohibits use of downloaded package software 141.

The expression "coincide" herein can include not only a case where the whole of unique information 143B coincides with the whole of unique information 143A, but also a case where a predetermined portion of unique information 143B coincides with a predetermined portion of unique information 143A. The expression "not coincide" indicates a case where the condition for "coincide" is not satisfied.

As described above, permission/prohibition of use of package software 141 is switched based on a result of the comparison between original unique information 143A and unique information 143B generated at the time at which package software 141 is executed or the like. Accordingly, for example, use of package software 141 can be prevented when package software 141 is transferred in an unauthorized manner to a controller different from the one to which package software 141 is downloaded. Moreover, since the mechanism for checking a license is included in package software 141, controller 100 does not need to have a license check function in advance.

### <B. Device Configuration of FA System 10>

With reference to Fig. 2, an exemplary device configuration of FA system 10 will be described. Fig. 2 is a schematic view schematically showing the device configuration of FA system 10.

FA system 10 includes one or more controllers 100 and one or more external devices 200. In the example of Fig. 2, FA system 10 includes two controllers 100A, 100B. As examples of external device 200 that can be connected to controller 100, development assistance device 200A, server 200B, and memory card 200C are shown.

In the description below, controllers 100A, 100B will be also collectively referred to as controller 100. Controller 100 has a plurality of physical communication ports. Different networks can be connected to the respective communication ports. In the example of Fig. 2, controller 100 has two communication ports P1, P2. A network NW1 is connected to communication port P1. A network NW2 is connected to communication port P2.

For network NW1, EtherNet/IP (registered trademark), EtherNet (registered trademark), or the like is employed, for example. As an example, various types of communication devices each having a function of communicating with controller 100 can be connected to network NW1, such as development assistance device 200A and server 200B.

Development assistance device 200A is a PC (Personal Computer), a tablet terminal, a smartphone, or the like, for example. A program development tool can be installed in development assistance device 200A. The program development tool is an application for assisting development of a control program for controller 100. As an example, the program development tool is "Sysmac Studio" provided by OMRON. The user can design a control program for controller 100 on the program development tool, and can install the designed control program to controller 100. The created control program is sent to controller 100 as a file of a code in an executable form compiled by development assistance device 200A.

Server 200B is a device that provides various types of package software 141 executable by controller 100. Examples of package software 141 to be provided include: a function of connecting to an external database; various types of functions for NC (Numerical Control) control; various types of functions for robotic control; various types of functions for AI (Artificial Intelligence); various types of data usable by controller 100 (for example, various types of data obtained through a learning process of AI); various types of functions of controlling specific drive devices 300 (for example, an oscillation control function); and the like. It should be noted that package software 141 is not limited to be provided from server 200B, and is provided from any external device 200. As an example, package software 141 may be provided from memory card 200C.

For network NW2, it is preferable to employ a field network that performs constant-cycle communication to ensure a time of arrival of data. As the field network that performs such constant-cycle communication, EtherCAT (registered trademark), CompoNet (registered trademark), or the like has been known. In accordance with the control program created on development assistance device 200A, controller 100 controls drive device 300 serving as a control target.

Drive device 300 represents a group of devices for performing predetermined operations onto a workpiece directly or indirectly. In the example of Fig. 2, drive device 300 includes a robot controller 300A, a servo driver 300B, an arm robot 301A controlled by robot controller 300A, a servo motor 301B controlled by servo driver 300B, and the like. Moreover, drive device 300 may also include: a visual sensor for capturing an image of a workpiece; other devices to be used in a production process; and the like.

### <C. Manner of Sales of Package Software 141>

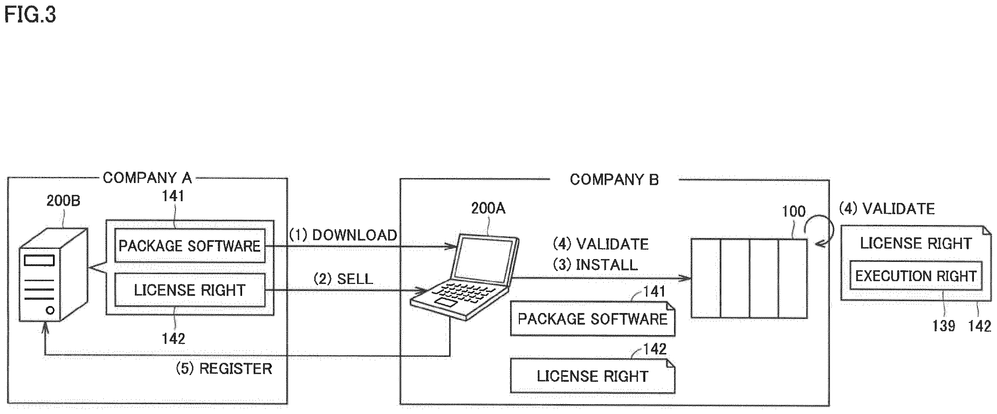

With reference to Fig. 3, the following describes an exemplary manner of sales of package software 141. Fig. 3 shows a mechanism for selling package software 141 by way of downloading.

The example of Fig. 3 shows server 200B from which package software 141 is provided, and development assistance device 200A to which package software 141 is provided. As an example, server 200B is placed in a company "A", which is a seller of package software 141. Development assistance device 200A is placed in a company "B", which is a purchaser of package software 141.

In a step (1), a user of development assistance device 200A accesses a web site or the like of server 200B to select a piece of package software for download from pieces of package software for sale. The pieces of package software for sale include: a program to be operated on firmware of controller 100; a firmware program to be added to the firmware; and the like. The package software to be operated on the firmware is operated depending on a basic function provided from the firmware.

The user of development assistance device 200A selects package software 141 for purchase and then performs a purchasing procedure. When the purchasing procedure is completed, server 200B installs purchased package software 141 into development assistance device 200A. On this occasion, in a step (2), server 200B transmits, to development assistance device 200A, a license right 142 for permitting use of package software 141.

In a step (3), development assistance device 200A installs, into controller 100, package software 141 and license right 142 that are installed from server 200B.

It is assumed that in a step (4), development assistance device 200A receives a validation manipulation for validating the license right for package software 141. Based on this, development assistance device 200A transmits a validation command to controller 100. Based on reception of the validation command, controller 100 generates execution right 139 from unique information 143A of controller 100.

In a step (5), based on the validation process for package software 141 being completed normally, development assistance device 200A transmits, to server 200B, an indication that a right of use of package software 141 is exercised. On this occasion, information about the user who exercises the right of use is transmitted to server 200B, and is registered into server 200B.

### <D. Data Flow>

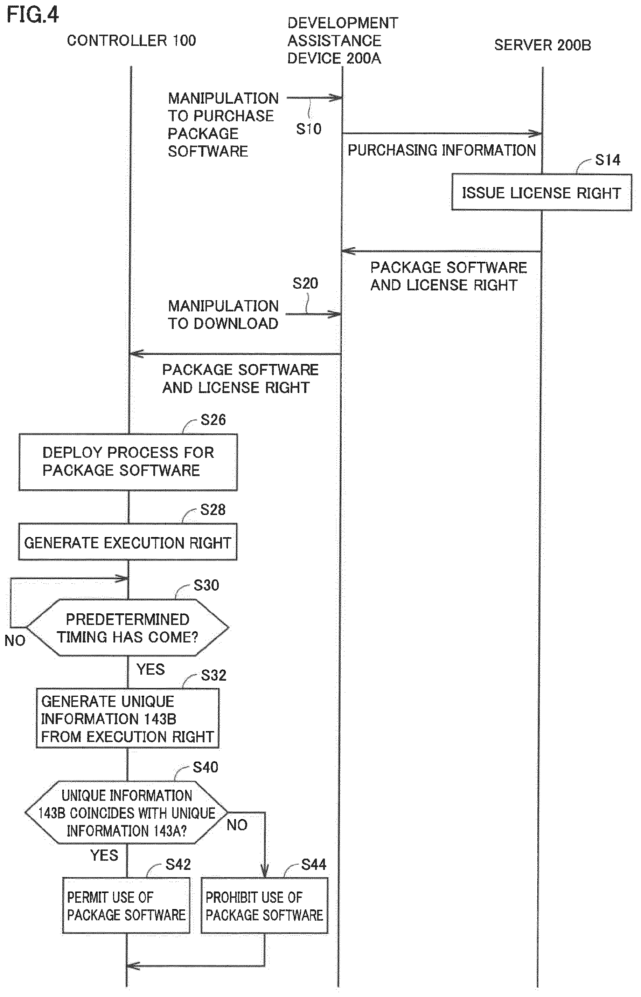

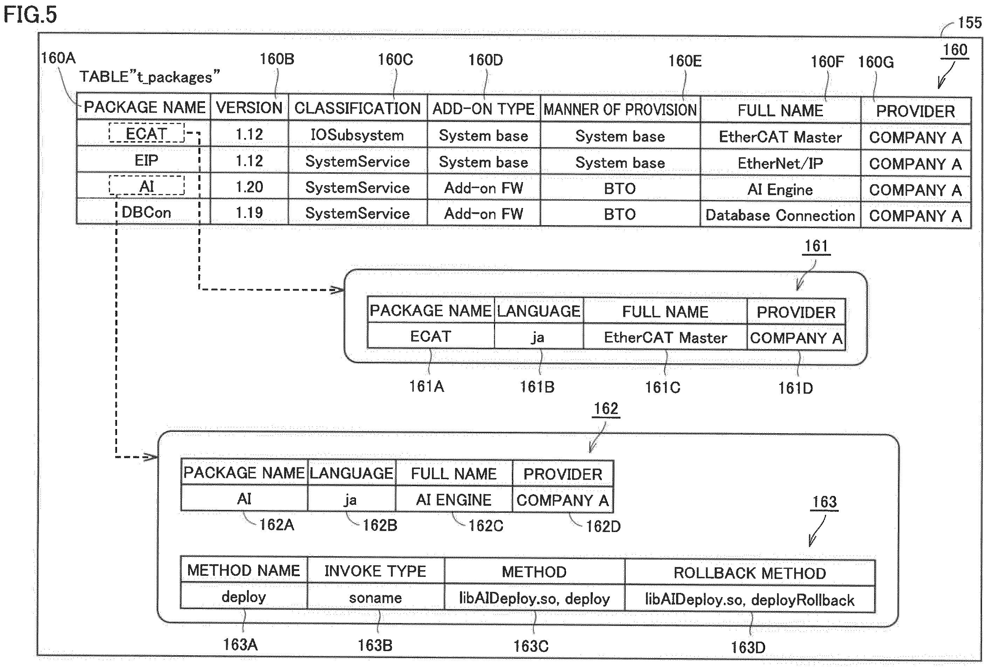

With reference to Fig. 4 and Fig. 5, the following describes a control flow for implementing the sale by way of downloading as shown in Fig. 3. Fig. 4 is a sequence diagram showing a data flow among controller 100, development assistance device 200A, and server 200B.

It is assumed that in a step S10, the user of development assistance device 200A accesses the web site of server 200B and performs a manipulation to purchase package software 141. On this time, the user inputs various types of information (hereinafter, also referred to as "purchasing information") in order to purchase package software 141. The purchasing information includes: information for specifying package software 141 for purchase; various types of information about the purchaser (for example, the name, address, and the like); and various types of information about controller 100 to which package software 141 is to be downloaded. The purchasing information thus input is transmitted to server 200B.

In a step S14, server 200B issues license right 142 for package software 141 based on the purchasing information received from development assistance device 200A. Issued license right 142 is transmitted to development assistance device 200A together with purchased package software 141.

It is assumed that in a step S20, development assistance device 200A receives a manipulation for downloading package software 141 downloaded from server 200B. Based on this, development assistance device 200A transmits package software 141 and license right 142 to designated controller 100.

In a step S26, controller 100 performs a deploy process to deploy package software 141 to internal storage device 110 (see Fig. 1). On this occasion, controller 100 updates a software management table for deploying and managing the package software in the internal storage device. Fig. 5 shows a data structure of a software management table 155.

Software management table 155 is a database for managing pieces of package software downloaded to controller 100. Software management table 155 includes: a list table 160 for pieces of package software; and pieces of detailed information 161 to 163 of the pieces of package software.

List table 160 for the pieces of package software includes: a column 160A that defines an abbreviation of each piece of package software; a column 160B that defines a version of the package software; a column 160C that defines a classification of the package software; a column 160D that defines an add-on type of the package software; a column 160E that defines a manner of provision of the package software; a column 160F that defines a full name of the package software; and a column 160F that defines a provider of the package software.

Each record of list table 160 for the pieces of package software is associated with the detailed information of the package software. As an example, the detailed information of each piece of package software 141 is associated using the information of column 160A of list table 160 as a key. In the example of Fig. 5, detailed information 161 is associated with a package name shown as "ECAT". The pieces of detailed information 162, 163 are associated with a package name shown as "AI".

Detailed information 161 includes: a column 161A that defines the abbreviation of the package software; a column 161B that indicates a type of supported language; a column 161C that defines the full name of the package software; and a column 161D that defines the provider of the package software.

Detailed information 162 includes: a column 162A that defines the abbreviation of the package software; a column 162B that indicates the type of supported language; a column 162C that defines the full name of the package software; and a column 162D that defines the provider of the package software.

In detailed information 163, various types of methods (processes) included in the package software are defined. Detailed information 163 includes: a column 163A that indicates a name of a method; a column 163B indicating an invoke type of the package software; a column 163C that defines a deploy method of the package software; and a column 163D that defines a rollback method of the package software.

With reference to Fig. 4 again, in a step S28, controller 100 serves as generation module 154 (see Fig. 1) to generate execution right 139 from its unique information 143A. Generation module 154 generates execution right 139 from unique information 143A in accordance with a predetermined encryption method. As an example, generation module 154 generates execution right 139 using a predetermined encryption key. Generated execution right 139 is stored in storage device 110 of controller 100.

In a step S30, controller 100 determines whether or not a predetermined timing has come. Examples of the predetermined timing include: a time at which controller 100 is activated; a time at which package software 141 is executed; and any predetermined timing after the generation of execution right 139. When it is determined that the predetermined timing has come (YES in step S30), controller 100 switches the control to a step S32. Otherwise (NO in step S30), controller 100 performs the process of step S30 again.

In step S32, controller 100 serves as check module 156 (see Fig. 1) to generate unique information 143B from execution right 139 generated in step S28. As an example, controller 100 decrypts execution right 139 in accordance with a decryption method corresponding to the encryption method used to generate execution right 139 from unique information 143A in step S28, thereby generating unique information 143B.

In a step S40, controller 100 serves as check module 156 (see Fig. 1) to determine whether or not unique information 143B generated in step S32 coincides with original unique information 143A. When it is determined that generated unique information 143B coincides with original unique information 143A (YES in step S40), controller 100 switches the control to a step S42. Otherwise (NO in step S40), controller 100 switches the control to a step S44.

In step S42, controller 100 permits use of downloaded package software 141. Any means can be employed to permit use of package software 141. As an example, a flag indicating prohibition/permission of use is managed by controller 100, and controller 100 rewrites the flag to indicate permission.

In step S44, controller 100 prohibits use of downloaded package software 141. Any means can be employed to prohibit use of package software 141. As an example, a flag indicating prohibition/permission of use is managed by controller 100, and controller 100 rewrites the flag to indicate prohibition.

### <E. Hardware Configuration>

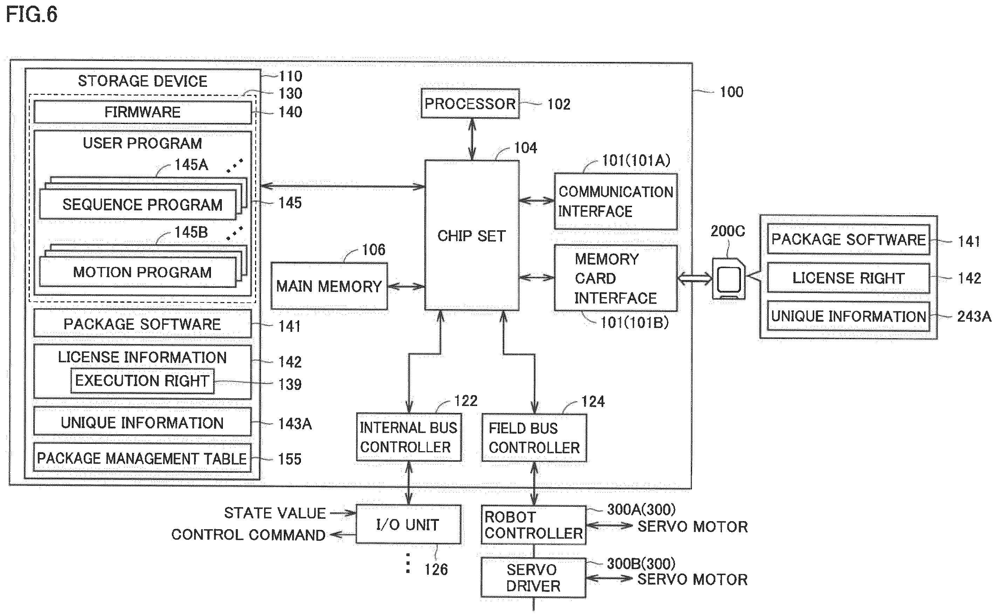

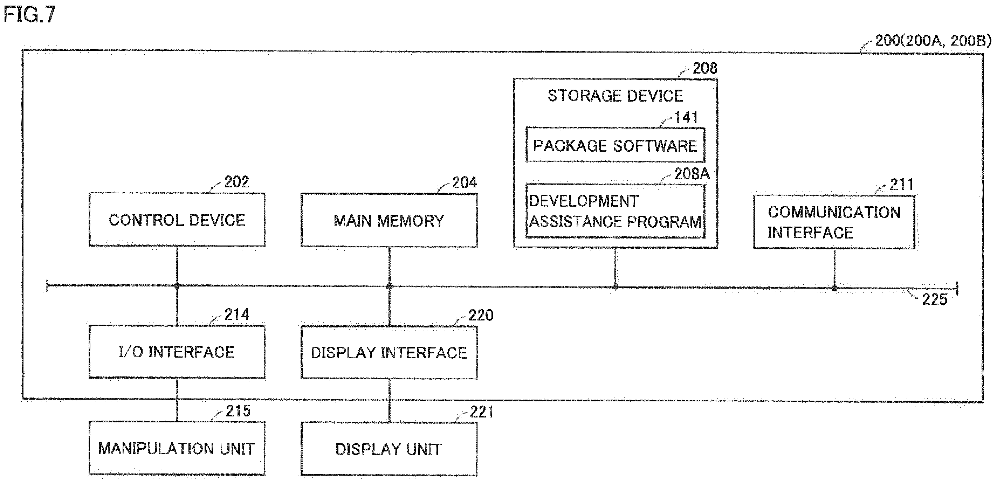

With reference to Fig. 6 and Fig. 7, the following sequentially describes hardware configurations of controller 100 and external device 200.

### (E1. Hardware Configuration of Controller 100)

First, the hardware configuration of controller 100 will be described with reference to Fig. 6. Fig. 6 is a schematic view showing an exemplary hardware configuration of controller 100.

Controller 100 includes: a communication interface 101A; a memory card interface 101B; processor 102, such as a CPU (Central Processing Unit) or a MPU (Micro-Processing Unit); a chip set 104; a main memory 106; nonvolatile storage device 110; an internal bus controller 122; and a field bus controller 124.

Processor 102 reads out control program 130 stored in storage device 110, expands it in main memory 106, and executes it, thereby implementing appropriate control over a drive device 300 or the like to be controlled. Control program 130 includes various types of programs for controlling controller 100. As an example, control program 130 includes a system program 140 as firmware, package software 141, a user program 145, and the like. System program 140 includes an instruction code for providing a basic function of controller 100 such as a data input/output process or execution timing control. User program 145 is downloaded from external device 200. User program 145 is appropriately designed for a control target on external device 200, and includes: a sequence program 145A for performing sequence control; and a motion program 145B for performing motion control.

Chip set 104 implements a process as a whole of controller 100 by controlling each component.

Storage device 110 stores various types of data in addition to control program 130. As an example, storage device 110 stores: license right 142 for package software 141; unique information 143A for uniquely identifying controller 100; software management table 155 (see Fig. 5) described above; and the like. License right 142 includes execution right 139 for package software 141. Execution right 139 is generated at a predetermined timing, such as a time at which package software 141 is downloaded (deployed), for example.

Internal bus controller 122 is an interface for exchanging data with various types of devices coupled to controller 100 through an internal bus. As an example of such devices, an I/O unit 126 is connected thereto.

Field bus controller 124 is an interface for exchanging data between controller 100 and various types of drive devices 300 coupled thereto through a field bus. As examples of such devices, robot controller 300A and servo driver 300B are connected thereto. In addition, a drive device such as a visual sensor may be connected thereto.

Each of internal bus controller 122 and field bus controller 124 can provide an appropriate command to a device connected thereto, and can obtain appropriate data managed by the device. Moreover, internal bus controller 122 and/or field bus controller 124 function also as interface(s) for exchanging data with robot controller 300A or servo driver 300B.

Communication interface 101A represents an example of obtaining unit 101 (see Fig. 1). Communication interface 101A controls exchange of data via various types of wired/wireless networks. Controller 100 communicates with external device 200, such as development assistance device 200A and server 200B, through communication interface 101A. Controller 100 can download package software 141 or the like from external device 200 through communication interface 101A.

Memory card interface 101B represents an example of obtaining unit 101 (see Fig. 1). Memory card interface 101B is an interface for electrically connecting memory card 200C (for example, an SD card), which is an exemplary external storage medium. Memory card 200C is attachable/detachable to/from memory card interface 101B. Memory card interface 101B can write data in memory card 200C, and read data from memory card 200C. Controller 100 can download package software 141 or the like from memory card 200C through memory card interface 101B. Moreover, memory card 200C stores: license right 142 for package software 141; unique information 243A for uniquely identifying memory card 200C; and the like.

### (E2. Hardware Configuration of External Device 200)

Next, the hardware configuration of external device 200 will be described with reference to Fig. 7. Fig. 7 is a schematic view showing the hardware configuration of external device 200.

As an example, external device 200 includes a computer configured in accordance with a general-purpose computer architecture. External device 200 is development assistance device 200A or server 200B described above, for example. External device 200 includes: a control device 202 such as a CPU or an MPU; a main memory 204; a nonvolatile storage device 208; a communication interface 211; an I/O (Input/Output) interface 214; and a display interface 220. These components are communicatively connected to one another through an internal bus 225.

Control device 202 expands, into main memory 204, a development assistance program 208A stored in storage device 208, and executes it, thereby implementing various types of processes in the program development tool. Development assistance program 208A is a program for providing a development environment for user program 145. In addition to development assistance program 208A, storage device 208 stores various types of data, such as package software 141 for distribution.

Communication interface 211 exchanges data with another communication device through a network. Examples of the other communication device include controller 100, and an external device such as a server. External device 200 may be configured such that various types of programs, such as development assistance program 208A, can be downloaded from the other communication device through communication interface 211.

I/O interface 214 is connected to a manipulation unit 215, and accepts, from manipulation unit 215, a signal indicating a user's manipulation. Typically, manipulation unit 215 includes a keyboard, a mouse, a touch panel, a touchpad, or the like, and receives a manipulation from a user.

Display interface 220 is connected to a display unit 221, and sends, to display unit 221, an image signal for displaying an image in accordance with a command from control device 202 or the like. Display unit 221 includes an LCD (Liquid Crystal Display), an organic EL (Electro Luminescence) display, or the like, and presents various types of information to a user. Various types of screens provided by the program development tool can be displayed on display unit 221. It should be noted that in the example of Fig. 7, external device 200 and display unit 221 are represented as separated components; however, external device 200 and display unit 221 may be configured in one piece.

### <F. Control Structure>

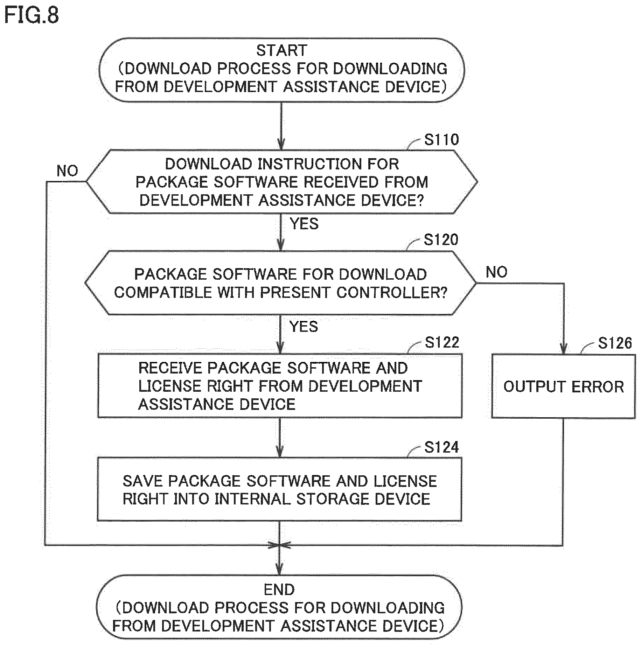

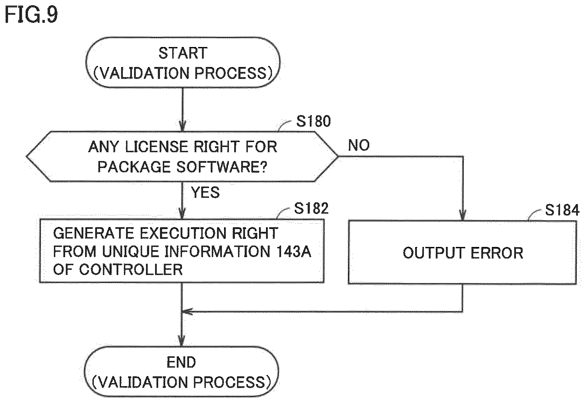

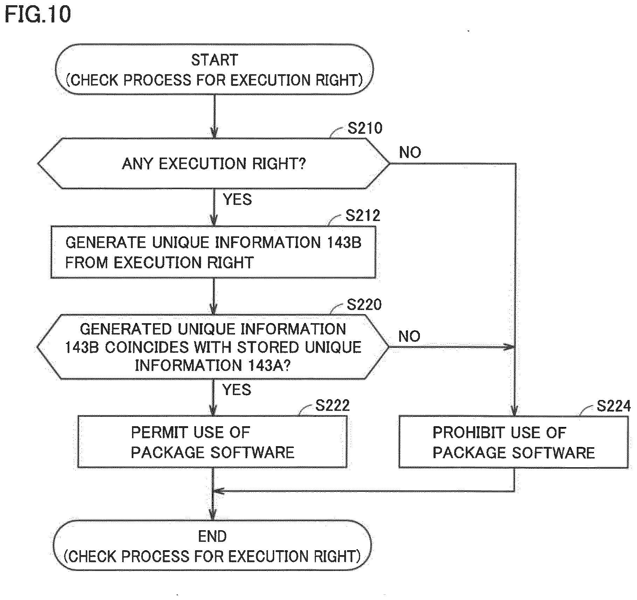

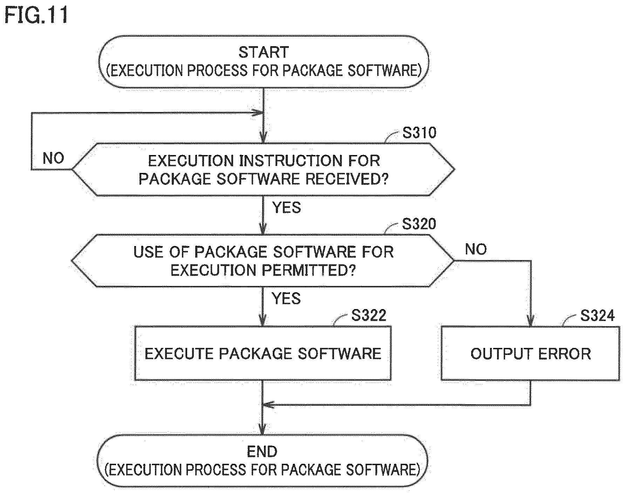

The following describes a control structure of controller 100 with reference to Fig. 8 to Fig. 12. Fig. 8 is a flowchart showing a process for downloading package software 141 from development assistance device 200A. Fig. 9 is a flowchart showing a process for validating use of package software 141 by generating execution right 139. Fig. 10 is a flowchart showing a check process for execution right 139. Fig. 11 is a flowchart showing an execution process for downloaded package software 141.

The processes shown in Fig. 8 to Fig. 11 are implemented by processor 102 of controller 100 executing the program. In another aspect, part or whole of the processes may be performed by a circuit element or other hardware.

The following sequentially describes the flowcharts shown in Fig. 8 to Fig. 11.

### (F1. Download Process for Package software 141)

First, with reference to Fig. 8, the following describes the download process for downloading package software 141 from development assistance device 200A.

In a step S110, processor 102 determines whether or not a download instruction for package software 141 is received from development assistance device 200A. The download instruction is issued when the user performs a download manipulation onto development assistance device 200A, for example. When it is determined that the download instruction for package software 141 is received from development assistance device 200A (YES in step S110), processor 102 switches the control to a step S120. Otherwise (NO in step S110), the download process shown in Fig. 8 is ended.

In step S120, processor 102 determines whether or not package software 141 for download is compatible with controller 100 to which package software 141 is to be downloaded. More specifically, processor 102 receives, from external device 200, software information about package software 141 for download. The software information includes format information of a controller 100 compatible therewith, for example. Controller 100 compares the format information defined in the package information with the format information of controller 100, and determines whether or not these pieces of format information coincide with each other. When these pieces of format information coincide with each other, processor 102 determines that package software 141 for download is compatible with controller 100.

When it is determined that package software 141 for download is compatible with controller 100 (YES in step S120), processor 102 switches the control to a step S122. Otherwise (NO in step S120), processor 102 switches the control to a step S126.

In step S122, processor 102 receives package software 141 and license right 142 for package software 141 from development assistance device 200A.

In a step S124, processor 102 saves received package software 141 and license right 142 into storage device 110 of controller 100.

In step S126, processor 102 outputs an error indicating that package software 141 for download is not compatible with controller 100. The error may be output in any manner. As an example, the error may be output as an error log, or may be output by way of an error sound, a message, or the like.

### (F2. Validation Process)

Next, with reference to Fig. 9, the following describes the validation process for validating use of package software 141. Execution of the validation process is started at an appropriate timing. As an example, execution of the validation process is started based on development assistance device 200A receiving a validation command. The validation command is issued to a designated controller 100 based on a user performing a validation manipulation onto development assistance device 200A, for example. When execution of the validation process is started, processes shown in Fig. 9 are sequentially executed.

In a step S180, processor 102 of controller 100 determines whether or not there is license right 142 for package software 141. Typically, processor 102 determines whether or not there is license right 142, based on whether or not license right 142 is stored in storage device 110 of controller 100. When it is determined that there is license right 142 for package software 141 (YES in step S180), processor 102 switches the control to a step S182. Otherwise (NO in step S180), processor 102 switches the control to a step S184.

In step S182, processor 102 serves as generation module 154 (see Fig. 1) to generate execution right 139 for package software 141 from unique information 143A of controller 100.

In step S184, processor 102 outputs an error indicating that there is no license right for package software 141. The error may be output in any manner. As an example, the error may be output as an error log, or may be output by way of an error sound, a message, or the like.

### (F3. Check Process for Execution Right)

Next, with reference to Fig. 10, the following describes the check process for the execution right generated in Fig. 9. The check process is a process for validating or invalidating use of package software 141. Execution of the check process is started at an appropriate timing. As an example, execution of the check process is started at a time at which controller 100 is activated, a time at which package software 141 is executed, or the like. When execution of the check process for license is started, processes shown in Fig. 10 are sequentially executed.

More specifically, in a step S210, processor 102 determines whether or not there is execution right 139 for package software 141. When it is determined that there is execution right 139 for package software 141 (YES in step S210), processor 102 switches the control to a step S212. Otherwise (NO in step S210), processor 102 switches the control to a step S224.

In step S212, processor 102 serves as decryption module 156A (see Fig. 1) to generate unique information 143B of controller 100 from execution right 139. Unique information 143B includes the manufacturing number of controller 100 or processor 102, a controller name, a MAC address, or other information for uniquely identifying controller 100, for example.

In a step S220, processor 102 serves as comparison module 156B (see Fig. 1) to determine whether or not unique information 143B generated in step S212 coincides with original unique information 143A stored in controller 100. When it is determined that unique information 143B coincides with original unique information 143A of controller 100 (YES in step S220), processor 102 switches the control to a step S222. Otherwise (NO in step S220), processor 102 switches the control to step S224.

In step S222, processor 102 permits use of package software 141. As an example, a flag indicating prohibition/permission of use is managed in storage device 110 of controller 100, and processor 102 rewrites the flag to indicate permission.

In step S224, processor 102 prohibits use of package software 141. As an example, a flag indicating prohibition/permission of use is managed in storage device 110 of controller 100, and processor 102 rewrites the flag to indicate prohibition.

### (F4. Execution Process for Package Software 141)

Next, with reference to Fig. 11, the following describes the execution process for downloaded package software 141.

In a step S310, processor 102 determines whether or not an execution instruction for package software 141 is received. When it is determined that the execution instruction for package software 141 is received (YES in step S310), processor 102 switches the control to a step S320. Otherwise (NO in step S310), processor 102 performs the process of step S310 again.

In step S320, processor 102 determines whether or not use of package software 141 for execution is permitted. As an example, when a flag indicating prohibition/permission of use of package software 141 indicates permission, processor 102 determines that use of package software 141 is permitted. When it is determined that use of package software 141 for execution is permitted (YES in step S320), processor 102 switches the control to a step S322. Otherwise (NO in step S320), processor 102 switches the control to a step S324.

In step S322, processor 102 executes package software 141.

In step S324, processor 102 does not execute package software 141 and outputs an error indicating that execution of package software 141 is prohibited. The error may be output in any manner. As an example, the error may be output as an error log, or may be output by way of an error sound, a message, or the like.

### <G. Modification 1>

### (G1. Other Manner of Sales of Package software 141)

In the description above, it is assumed that package software 141 is sold by way of downloading; however, the manner of sales of package software 141 is not limited to this. As an example, package software 141 stored in memory card 200C may be sold.

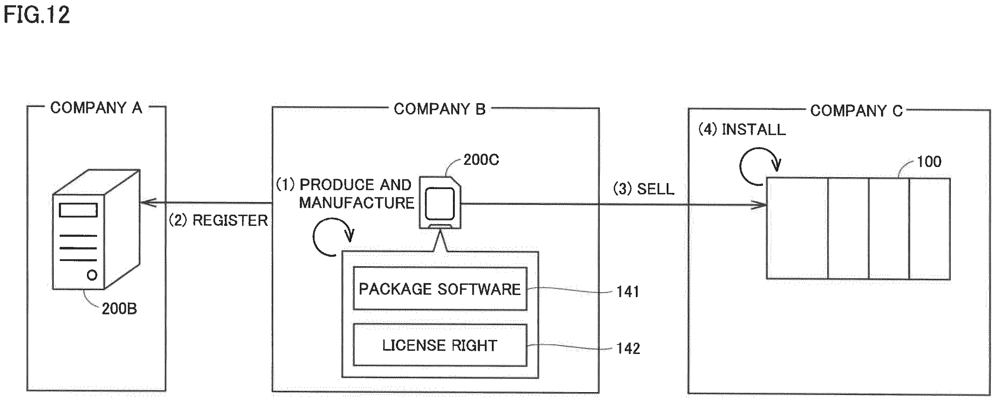

The following describes another exemplary manner of sales of package software 141 with reference to Fig. 12. Fig. 12 shows a mechanism for selling package software 141 by way of memory card 200C.

In the example of Fig. 12, companies "A" to "C" are shown. Company "A" has a server 200B for managing package software 141. Company "B" sells memory card 200C having package software 141 stored therein. Company "C" purchases package software 141.

As a more specific manner of sales, in a step (1), memory card 200C having package software 141 for sale stored therein is manufactured by company "B".

In a step (2), company "B" makes registration of package software 141 to company "A". On this occasion, package information about package software 141 for sale is transmitted to server 200B of company "A". Based on the received package information, server 200B performs a registration process for package software 141.

In a step (3), a purchaser of company "C" accesses a web site or the like of company "B", selects package software 141 for purchase, and performs a purchasing procedure. When the purchasing procedure is completed, company "B" prepares memory card 200C having purchased package software 141 stored therein. On this occasion, license right 142 for package software 141 is issued and is saved in memory card 200C. Company "B" sends, to company "C", memory card 200C having package software 141 and license right 142 stored therein.

In a step (4), the purchaser connects purchased memory card 200C to controller 100, and installs package software 141 and license right 142 thereto from memory card 200C.

### (G2. Download Process for Package Software 141)

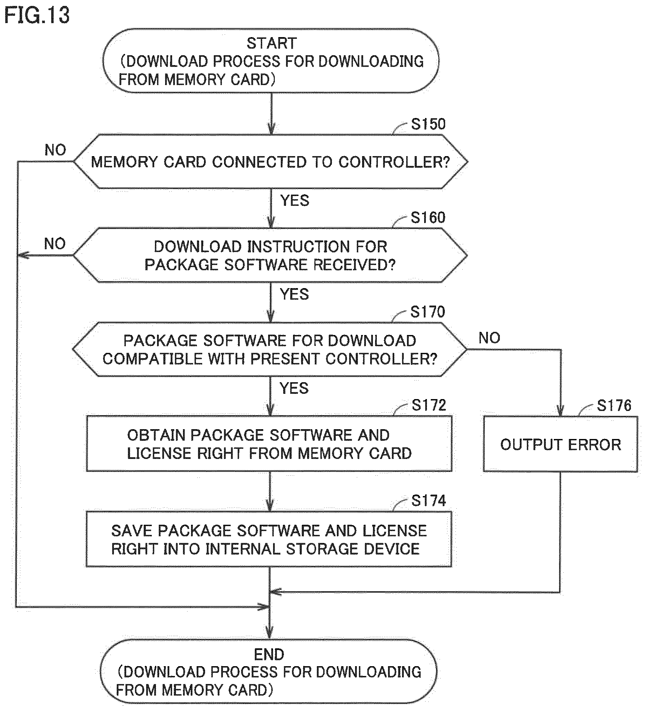

With reference to Fig. 13, the following describes the download process for downloading package software 141 in the present modification. Fig. 13 is a flowchart showing a process for downloading package software 141 from memory card 200C.

The process shown in Fig. 13 is implemented by processor 102 of controller 100 executing the program. In another aspect, part or whole of the process may be performed by a circuit element or other hardware.

In a step S150, processor 102 determines whether or not memory card 200C is connected to controller 100. When it is determined that memory card 200C is connected to controller 100 (YES in step S150), processor 102 switches the control to step S160. Otherwise (NO in step S150), processor 102 ends the download process shown in Fig. 13.

In a step S160, processor 102 determines whether or not a download instruction for package software 141 is received from development assistance device 200A. The download instruction is issued when the user performs a download manipulation onto development assistance device 200A, for example. When it is determined that the download instruction for package software 141 is received from development assistance device 200A (YES in step S160), processor 102 switches the control to a step S170. Otherwise (NO in step S160), the download process shown in Fig. 13 is ended.

In step S170, processor 102 determines whether or not package software 141 for download is compatible with controller 100 to which package software 141 is to be downloaded. More specifically, processor 102 obtains, from memory card 200C, software information about package software 141 for download. The software information includes format information of a controller 100 compatible therewith, for example. Controller 100 compares the format information defined in the package information with the format information of controller 100, and determines whether or not these pieces of format information coincide with each other. When these pieces of format information coincide with each other, processor 102 determines that package software 141 for download is compatible with controller 100 to which package software 141 is to be downloaded.

When it is determined that package software 141 for download is compatible with controller 100 (YES in step S170), processor 102 switches the control to a step S172. Otherwise (NO in step S170), processor 102 switches the control to a step S176.

In step S172, processor 102 obtains package software 141 and license right 142 for package software 141 from memory card 200C.

In step S174, processor 102 saves obtained package software 141 and license right 142 into storage device 110 of controller 100.

In step S176, processor 102 outputs an error indicating that package software 141 for download is not compatible with controller 100. The error may be output in any manner. As an example, the error may be output as an error log, or may be output by way of an error sound, a message, or the like.

### <H. Deploy Process for Package Software 141>

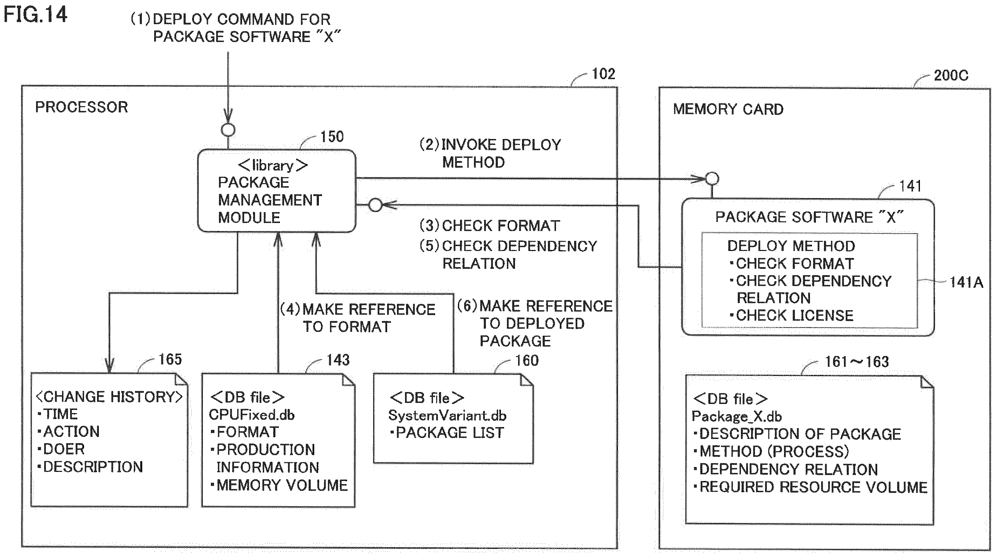

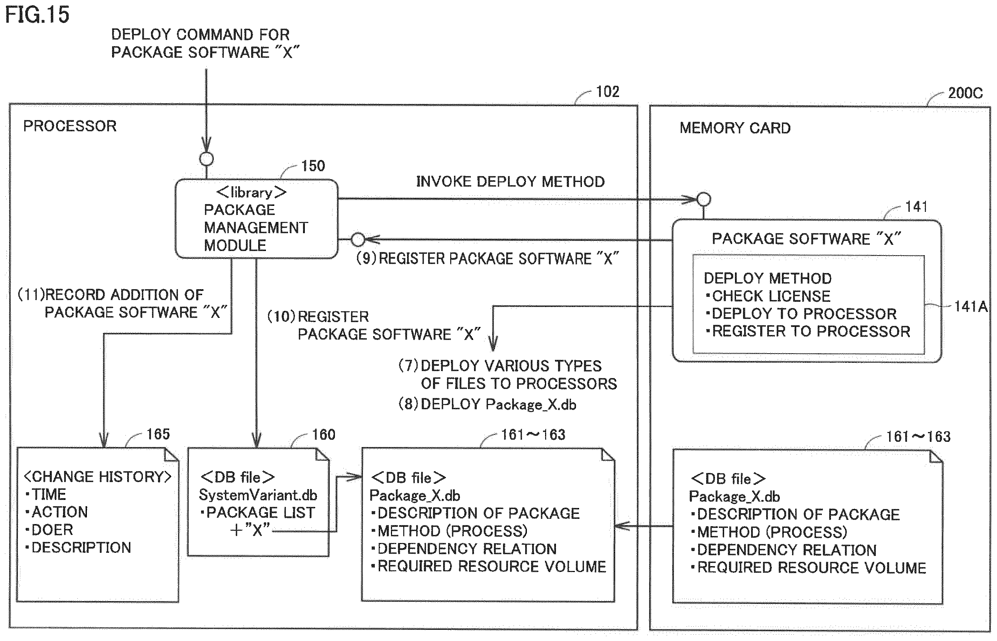

With reference to Fig. 14 and Fig. 15, the following describes the deploy process for deploying package software 141 in controller 100. Fig. 14 schematically shows a flow of the deploy process for package software 141. Fig. 15 shows continuation of the deploy process shown in Fig. 14.

Processor 102 of controller 100 includes a package management module 150 for managing the downloaded package software. In memory card 200C, package software 141 for download is indicated as package software "X".

In a step (1), a certain invoker outputs a deploy command for package software "X" to package management module 150. Examples of the invoker include: an updater of the firmware; external device 200 (for example, development assistance device 200A); a process in controller 100; a library in controller 100; and the like.

In a step (2), package management module 150 executes a deploy method of package software "X" on memory card 200C. The deploy method is defined in "Package_X.db" in advance, and package management module 150 searches for this method from "Package_X.db" and executes it.

In steps (3) and (4), deploy method 141A starts a check as to whether or not format information of processor 102 of controller 100 is compatible with package software "X".

More specifically, deploy method 141A makes reference to unique information 143A of processor 102 to obtain the format information of processor 102. Deploy method 141A compares the format information of processor 102 with the compatible format information of package software "X", so as to check whether or not package software "X" can be deployed in controller 100. When the obtained format of processor 102 coincides with the compatible format of package software "X", deploy method 141A determines that package software "X" can be deployed in controller 100. Otherwise, the deploy method determines that package software "X" cannot be deployed in controller 100.

In steps (5) and (6), deploy method 141A checks a dependency relation between package software 141 for download and a package software (hereinafter, also referred to as "existing package software") already downloaded in controller 100.

More specifically, deploy method 141A makes reference to list table 160 for pieces of package software to obtain a list of pieces of existing package software. Then, deploy method 141A checks a dependency relation between package software 141 for download and each piece of existing package software. When package software 141 for download is in such a relation that package software 141 cannot coexist with the existing package software, it is determined that package software "X" cannot be deployed in controller 100.

In a step (7), deploy method 141A deploys various types of files (for example, an so file) in processor 102.

In a step (8), deploy method 141A deploys the DB file "Package_X.db" in processor 102. In the DB file "Package_X.db", information of deploy method 141A is described. Examples of the DB file are the above-described pieces of detailed information 161 to 163.

In a step (9), based on the deployment of the various types of files being completed, deploy method 141A resisters package software "X" to package management module 150.

In a step (10), package management module 150 adds, to list table 160 for pieces of package software, the information of the newly deployed package software "X".

In a step (11), package management module 150 saves, in a change history 165, a record of package change/addition.

It should be noted that in Fig. 14 and Fig. 15, explanation has been made with respect to the deploy process in the case where package software 141 is downloaded from memory card 200C; however, the deploy process shown in Fig. 14 and Fig. 15 can be also applied to a case where package software 141 is downloaded from an external device 200 other than memory card 200C.

### <I. Transfer Process for Package Software 141>

Package software 141 downloaded to controller 100 can be transferred to external device 200. On this occasion, license right 142 including execution right 139 for package software 141, and the various types of function modules for checking the license are deleted from controller 100. Accordingly, a plurality of execution rights 139 and license rights 142 never exist, whereby license right 142 can be managed uniquely.

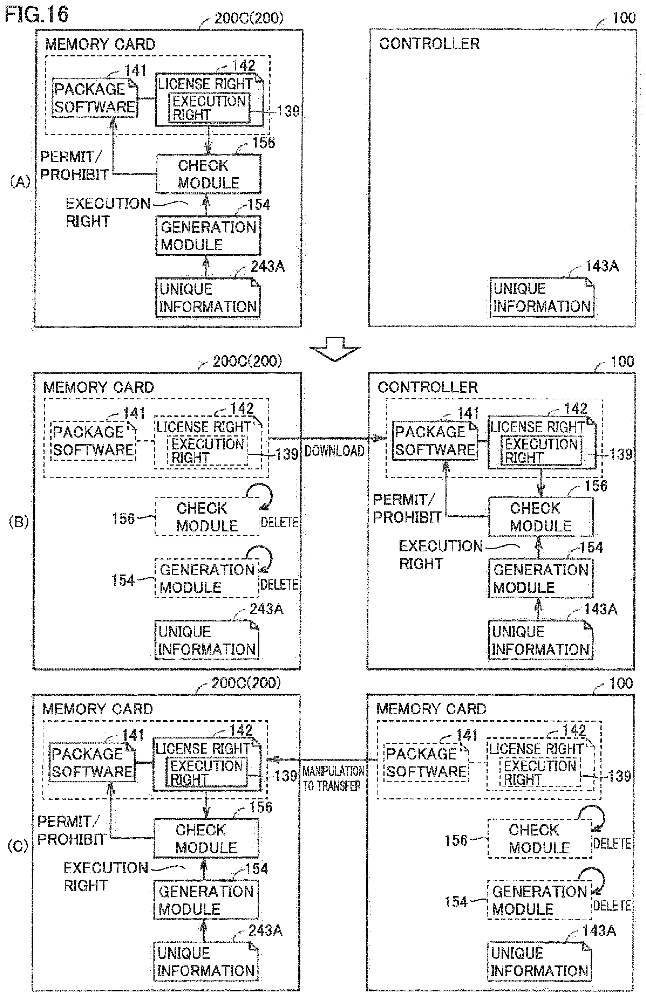

The following describes the transfer process for package software 141 with reference to Fig. 16. Fig. 16 shows a state in which package software 141 is transferred between controller 100 and memory card 200C.

Fig. 16 (A) shows a state before downloading package software 141 to controller 100. Controller 100 has its unique information 143A stored therein. Memory card 200C stores: package software 141 for download; license right 142 including execution right 139 therefor; generation module 154; check module 156; and unique information 243A of memory card 200C.

Fig. 16 (B) shows a state when downloading package software 141 from memory card 200C to controller 100. Based on package software 141 being transferred, package software 141, license right 142 including execution right 139 therefor, generation module 154, and check module 156 are deleted from memory card 200C. A function of transferring package software 141 from memory card 200C to controller 100 is incorporated in package software 141 itself, for example. The function of transferring is performed by processor 102 of controller 100.

Fig. 16 (C) shows a state when transferring package software 141 from controller 100 to memory card 200C. Based on package software 141 being transferred, package software 141, license right 142 including execution right 139 therefor, generation module 154, and check module 156 are deleted from controller 100. A function of transferring package software 141 from controller 100 to memory card 200C is incorporated in package software 141 itself, for example. The function of transferring is performed by processor 102 of controller 100.

It should be noted that in Fig. 16, explanation has been made with respect to the transfer process for package software 141 between controller 100 and memory card 200C; however, the transfer function can be also applied to transfer of package software 141 between controller 100 and an external device 200 other than memory card 200C.

### <J. Modification 2>

The above description is directed to the example in which package software 141 is sold by way of downloading, and the example in which package software 141 stored in memory card 200C is sold; however, the manner of sales of package software 141 is not limited to these. As an example, package software 141 may be sold by way of BTO.

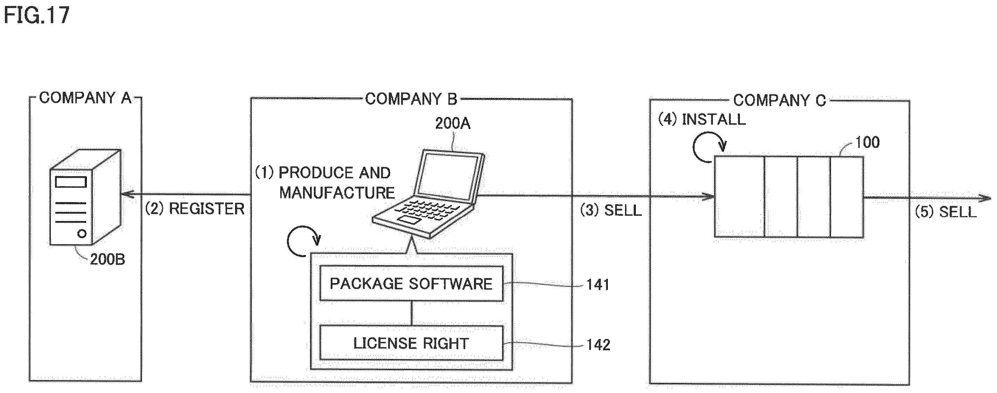

The following describes still another exemplary manner of sales of package software 141 with reference to Fig. 17. Fig. 17 shows a mechanism for selling package software 141 by way of BTO.

In the example of Fig. 17, companies "A" to "C" are shown. Company "A" has server 200B for managing package software 141. Company "B" is a company that sells package software 141. Company "C" is a company that purchases package software 141, controller 100, and the like from company "B" and other companies and that sells a system in which these are combined.

As a more specific manner of sales, in a step (1), a designer of company "B" uses development assistance device 200A to design package software 141 for sale.

In a step (2), company "B", which sells package software 141, registers package software 141 for sale to company "A". On this occasion, package information about package software 141 for sale is transmitted to server 200B of company "A". Based on the received package information, server 200B performs a registration process for package software 141.

In a step (3), a purchaser of company "C" accesses a web site or the like of company "B", selects package software 141 for download, and performs a purchasing procedure. On this occasion, unique information of controller 100 to which package software 141 is to be downloaded is input. When the purchasing procedure is completed, license right 142 is generated from the unique information for uniquely identifying controller 100 to which package software 141 is to be downloaded, and is transmitted to company "C" together with purchased package software 141.

In a step (4), purchased package software 141 and license right 142 are installed in controller 100.

In a step (5), company "C" sells, to other companies, controller 100 having package software 141 and license right 142 installed therein.

### <K. Conclusion>

As described above, controller 100 generates execution right 139 for package software 141 from unique information 143A of controller 100 at a time at which package software 141 is downloaded or the like. Then, controller 100 generates unique information 143B from execution right 139 at the time at which package software 141 is executed, the time at which controller 100 is activated, or the like. When generated unique information 143B does not coincide with original unique information 143A, controller 100 prohibits use of package software 141.

Accordingly, package software 141 cannot be used when package software 141 is transferred in an unauthorized manner to a controller different from one to which package software 141 is downloaded, for example. Moreover, since the mechanism for checking a license is included in package software 141, controller 100 does not need to have a license check function in advance.

The embodiments disclosed herein are illustrative and non-restrictive in any respect. The scope of the present invention is defined by the terms of the claims, rather than the embodiments described above, and is intended to include any modifications within the scope of the claims.

### REFERENCE SIGNS LIST

10: FA system; 100, 100A, 100B: controller; 101: obtaining unit; 101A, 211: communication interface; 101B: memory card interface; 102: processor; 104: chip set; 106, 204: main memory; 110, 208: storage device; 122: internal bus controller; 124: field bus controller; 126: I/O unit; 130: control program; 139: execution right; 140: system program; 141: package software; 141A: deploy method; 142: license right; 143A, 143B, 243A: unique information; 145: user program; 145A: sequence program; 145B: motion program; 150: package management module; 154: generation module; 155: software management table; 156: check module; 156A: decryption module; 156B: comparison module; 160: list table; 160A, 160B, 160C, 160D, 160E, 160F, 161A, 161B, 161C, 161D, 162A, 162B, 162C, 162D, 163A, 163B, 163C, 163D: column; 161, 162, 163: detailed information; 165: change history; 200: external device; 200A: development assistance device; 200B: server; 200C: memory card; 202: control device; 208A: development assistance program; 214: interface; 215: manipulation unit; 220: display interface; 221: display unit; 225: internal bus; 300: drive device; 300A: robot controller; 300B: servo driver; 301A: arm robot; 301B: servo motor.

## Claims

1. A controller for controlling a control target (300), the controller (100) comprising:
an obtaining unit (101) that is configured to obtain, from an external device (200) including a communication device that is configured to communicate with the controller (100), software (141) to be used by the controller (100), by downloading the software (141) from the communication device communicatively connected to the controller (100); and
a processor (102) that is configured to execute the software (141), wherein
the software (141) includes
a generation module (154) that is configured to generate an execution right (139) for the software (141) from first unique information for uniquely identifying the controller (100) or the external device (200), and
a check module (156) that is configured to generate second unique information from the execution right (139) at a predetermined timing after the generation of the execution right (139), and that is configured to prohibit use of the software (141) when the second unique information does not coincide with the first unique information,
wherein the processor (102) is further configured to delete the execution right (139) when transferring the obtained software (141) from the controller (100) to the external device (200) to delete the generation module (154) and the check module (156) when transferring the obtained software (141) from the controller (100) to the external device (200).

2. The controller according to claim 1, wherein
the external device (200) includes a memory card that is electrically connectable to the controller (100), and
the obtaining unit (101) is configured to obtain the software (141) from the memory card electrically connected to the controller (100).

3. The controller according to any one of claims 1 to 2, wherein the software (141) obtainable from the external device (200) includes at least one of a program to be operated on firmware of the controller (100), a program to be added to the firmware, and data usable by the controller (100).

4. A method for managing a license of software (141) used by a controller (100) for controlling a control target, the method comprising:
obtaining, from an external device (200) including a communication device that is configured to communicate with the controller (100), software (141) to be used by the controller (100), and first license information for the software (141), by downloading the software (141) from the communication device communicatively connected to the controller (100); and
executing the software (141), wherein
the executing includes
generating an execution right (139) for the software (141) from first unique information for uniquely identifying the controller (100) or the external device (200), and
generating second unique information from the execution right (139) at a predetermined timing after the generation of the execution right (139), and prohibiting use of the software (141) when the second unique information does not coincide with the first unique information,
wherein the execution right (139) is deleted when transferring the obtained software (141) from the controller (100) to the external device (200) the generation module (154) and the check module (156) are deleted when transferring the obtained software (141) from the controller (100) to the external device (200).

5. A program for managing a license of software (141) used by a controller (100) for controlling a control target,
the program comprising instructions which, when the program is executed by the controller being a computer, cause the controller (100) to perform the method according to claim 4.

## Patentansprüche

1. Steuerung zum Steuern eines Steuerziels (300), wobei die Steuerung (100) umfasst:
eine Erfassungseinheit (101), die eingerichtet ist, von einer externen Vorrichtung (200), die eine Kommunikationsvorrichtung umfasst, die eingerichtet ist, mit der Steuerung (100) zu kommunizieren, Software (141) zu erhalten, die von der Steuerung (100) verwendet werden soll, indem die Software (141) von der Kommunikationsvorrichtung, die kommunikativ mit der Steuerung (100) verbunden ist, heruntergeladen wird; und
einen Prozessor (102), der eingerichtet ist, die Software (141) auszuführen, wobei
die Software (141) umfasst
ein Erzeugungsmodul (154), das eingerichtet ist, ein Ausführungsrecht (139) für die Software (141) aus ersten eindeutigen Informationen zur eindeutigen Identifizierung der Steuerung (100) oder des externen Geräts (200) zu erzeugen, und
ein Prüfmodul (156), das eingerichtet ist, eine zweite eindeutige Information aus dem Ausführungsrecht (139) zu einem vorbestimmten Zeitpunkt nach der Erzeugung des Ausführungsrechts (139) zu erzeugen, und das eingerichtet ist, die Verwendung der Software (141) zu verbieten, wenn die zweite eindeutige Information nicht mit der ersten eindeutigen Information übereinstimmt,
wobei der Prozessor (102) ferner eingerichtet ist, das Ausführungsrecht (139) zu löschen, wenn dieser die erhaltene Software (141) von der Steuerung (100) an die externe Vorrichtung (200) überträgt, und/oder das Erzeugungsmodul (154) und das Prüfmodul (156) zu löschen, wenn dieser die erhaltene Software (141) von der Steuerung (100) an die externe Vorrichtung (200) überträgt.

2. Steuerung nach Anspruch 1, wobei
die externe Vorrichtung (200) eine Speicherkarte umfasst, die elektrisch mit der Steuerung (100) verbunden werden kann, und
die Erfassungseinheit (101) eingerichtet ist, die Software (141) von der mit dem Steuergerät (100) elektrisch verbundenen Speicherkarte zu erhalten.

3. Steuerung nach einem der Ansprüche 1 bis 2, wobei die von der externen Vorrichtung (200) erhältliche Software (141) mindestens eines von einem Programm, das auf der Firmware der Steuerung (100) betrieben werden soll, einem Programm, das der Firmware hinzugefügt werden soll, und von der Steuerung (100) nutzbaren Daten umfasst.

4. Verfahren zur Verwaltung einer Softwarelizenz (141), die von einer Steuerung (100) zum Steuern eines Steuerziels verwendet wird, wobei das Verfahren umfasst:
Erhalten von einer externen Vorrichtung (200), die eine Kommunikationsvorrichtung umfasst, die eingerichtet ist, mit der Steuerung (100) zu kommunizieren, von Software (141), die von der Steuerung (100) verwendet werden soll, und von ersten Lizenzinformationen für die Software (141), durch Herunterladen der Software (141) von der Kommunikationsvorrichtung, die kommunikativ mit der Steuerung (100) verbunden ist; und
Ausführen der Software (141), wobei
das Ausführen umfasst
Erzeugen eines Ausführungsrechts (139) für die Software (141) aus ersten eindeutigen Informationen zur eindeutigen Identifizierung der Steuerung (100) oder der externen Vorrichtung (200), und
Erzeugen einer zweiten eindeutigen Information aus dem Ausführungsrecht (139) zu einem vorbestimmten Zeitpunkt nach dem Erzeugen des Ausführungsrechts (139), und Verhindern der Verwendung der Software (141), wenn die zweite eindeutige Information nicht mit der ersten eindeutigen Information übereinstimmt,
wobei das Ausführungsrecht (139) gelöscht wird, wenn die erhaltene Software (141) von der Steuerung (100) an das externe Gerät (200) übertragen wird und/oder das Erzeugungsmodul (154) und das Prüfmodul (156) gelöscht werden, wenn die erhaltene Software (141) von der Steuerung (100) an das externe Gerät (200) übertragen wird.

5. Programm zur Verwaltung einer Softwarelizenz (141), die von einer Steuerung (100) zum Steuern eines Steuerziels verwendet wird,
wobei das Programm Anweisungen umfasst, die, wenn das Programm von der Steuerung, die ein Computer ist, ausgeführt wird, die Steuerung (100) veranlassen, das Verfahren nach Anspruch 4 durchzuführen.

## Revendications

1. Contrôleur pour contrôler une cible de contrôle (300), le contrôleur (100) comprenant :
une unité d'obtention (101) qui est configurée pour obtenir, à partir d'un dispositif externe (200) incluant un dispositif de communication qui est configuré pour communiquer avec le contrôleur (100), un logiciel (141) destiné à être utilisé par le contrôleur (100), en téléchargeant le logiciel (141) à partir du dispositif de communication connecté de manière communicative au contrôleur (100) ; et
un processeur (102) qui est configuré pour exécuter le logiciel (141), où
le logiciel (141) inclut
un module de génération (154) qui est configuré pour générer un droit d'exécution (139) pour le logiciel (141) à partir de premières informations uniques pour identifier de manière unique le contrôleur (100) ou le dispositif externe (200), et
un module de vérification (156) qui est configuré pour générer des deuxièmes informations uniques à partir du droit d'exécution (139) à un moment prédéterminé après la génération du droit d'exécution (139), et qui est configuré pour interdire l'utilisation du logiciel (141) lorsque les deuxièmes informations uniques ne coïncident pas avec les premières informations uniques,
où le processeur (102) est en outre configuré pour supprimer le droit d'exécution (139) lors du transfert du logiciel obtenu (141) du contrôleur (100) vers le dispositif externe (200) et/ou pour supprimer le module de génération (154) et le module de vérification (156) lors du transfert du logiciel obtenu (141) du contrôleur (100) vers le dispositif externe (200).

2. Contrôleur selon la revendication 1, dans lequel
le dispositif externe (200) inclut une carte mémoire qui peut être connectée électriquement au contrôleur (100), et
l'unité d'obtention (101) est configurée pour obtenir le logiciel (141) de la carte

3. Contrôleur selon l'une quelconque des revendications 1 et 2, où le logiciel (141) pouvant être obtenu à partir du dispositif externe (200) inclut au moins un parmi un programme à exécuter sur le micrologiciel du contrôleur (100), un programme à ajouter au micrologiciel et des données utilisables par le contrôleur (100).

4. Procédé de gestion d'une licence de logiciel (141) utilisée par un contrôleur (100) pour contrôler une cible de contrôle, le procédé comprenant :
l'obtention, à partir d'un dispositif externe (200) incluant un dispositif de communication qui est configuré pour communiquer avec le contrôleur (100), d'un logiciel (141) destiné à être utilisé par le contrôleur (100), et de premières informations de licence pour le logiciel (141), en téléchargeant le logiciel (141) à partir du dispositif de communication connecté de manière communicative au contrôleur (100) ; et
l'exécution du logiciel (141), où
l'exécution inclut
la génération d'un droit d'exécution (139) pour le logiciel (141) à partir des premières informations uniques pour identifier de manière unique le contrôleur (100) ou le dispositif externe (200), et
la génération de deuxièmes informations uniques à partir du droit d'exécution (139) à un moment prédéterminé après la génération du droit d'exécution (139), et l'interdiction de l'utilisation du logiciel (141) lorsque les deuxièmes informations uniques ne coïncident pas avec les premières informations uniques,
où le droit d'exécution (139) est supprimé lors du transfert du logiciel obtenu (141) du contrôleur (100) vers le dispositif externe (200) et/ou le module de génération (154) et le module de vérification (156) sont supprimés lors du transfert du logiciel obtenu (141) du contrôleur (100) vers le dispositif externe (200).

5. Programme de gestion d'une licence de logiciel (141) utilisé par un contrôleur (100) pour contrôler une cible de contrôle,
le programme comprenant des instructions qui, lorsque le programme est exécuté par le contrôleur qui est un ordinateur, amènent le contrôleur (100) à exécuter le procédé selon la revendication 4.
